(19) **Europäisches Patentamt**

**European Patent Office**

**Office européen des brevets**

(11) **EP 1 531 407 A1**

(12) **DEMANDE DE BREVET EUROPEEN**

(43) Date de publication:
**18.05.2005 Bulletin 2005/20**

(51) Int Cl.⁷: **G06F 17/30**

(21) Numéro de dépôt: **04292643.6**

(22) Date de dépôt: **09.11.2004**

(84) Etats contractants désignés:
**AT BE BG CH CY CZ DE DK EE ES FI FR GB GR HU IE IS IT LI LU MC NL PL PT RO SE SI SK TR**
Etats d'extension désignés:
**AL HR LT LV MK YU**

(30) Priorité: **13.11.2003 FR 0313297**

(71) Demandeur: **FRANCE TELECOM**
**75015 Paris (FR)**

(72) Inventeurs:
- **Peral Lecha, Victor**
  **22560 Trebeurden (FR)**
- **Biettron, Laurent**
  **22300 Lannion (FR)**

(74) Mandataire: **Zapalowicz, Francis**
**Bureau D.A. Casalonga-Josse,**
**Paul-Heyse-Strasse 33**
**80336 München (DE)**

(54) **Procédé et système d'interrogation d'une base de données multimédia à partir d'un terminal de télécommunication**

(57)     Procédé d'interrogation d'une base de données multimédia à partir d'un terminal de télécommunication. On interroge la base de données en mettant en oeuvre une étape itérative dans laquelle, à l'itération courante, on interroge une partie extraite de la base de données à partir d'un ensemble ordonné de critères d'interrogation élaboré à l'itération précédente ou lors d'une étape d'initialisation (10) précédente si l'itération courante est la première itération, et à partir d'un vecteur de critères comprenant des valeurs caractéristiques d'un ensemble prédéterminé de critères d'interrogation de la partie extraite de la base de données. Le vecteur de critères (Vcr) est initialisé lors de l'étape d'initialisation (10) si l'itération courante est la première itération, et déterminé lors de l'itération précédente sinon. Les critères d'interrogation sont déterminés de manière à réduire le nombre de réponses respectivement fournies lors des itérations successives.

FIG.2

EP 1 531 407 A1

**Description**

L'invention concerne le domaine des technologies de l'information, et plus particulièrement le domaine des interfaces hommes-machine (IHM) lors d'un accès multimodal, c'est-à-dire un accès à une base données multimédia selon plusieurs modes, par exemple par mode clavier et/ou mode vocal et/ou mode graphique.

La présente invention concerne plus particulièrement un procédé et un dispositif d'interrogation d'une base de données multimédia à partir d'un terminal de télécommunication.

On entend par base de données multimédia, une base de données comprenant des enregistrements dont les champs peuvent contenir ou faire référence à des données de type multimédia comme du texte, du son, de l'image ou de la vidéo. En d'autres termes, une base de données multimédia permet une utilisation simultanée de plusieurs types de données numériques.

De nombreux services proposent à un utilisateur d'obtenir des informations par accès à des bases de données. Ces applications peuvent être complètement embarquées sur des terminaux de télécommunication fixes ou mobiles, ou distribuées sur diverses plates-formes reliées en réseau.

Il arrive fréquemment que, suite à une demande d'informations de l'utilisateur à travers une application mettant en oeuvre un service, le nombre de réponses à la requête traduisant la demande soit trop important. Il se pose alors de nombreux problèmes, par exemple d'affichage. Certaines applications proposent alors d'affiner la demande par une nouvelle demande d'informations basée sur d'autres critères d'interrogation de la base que ceux utilisés précédemment. Ces critères sont prédéterminés, et ne permettent pas de rendre fiable une diminution rapide du nombre de réponses à une interrogation de la base de données.

Il existe, dans l'état de la technique, des applications visant à améliorer la diminution du nombre d'enregistrements en réponse à une interrogation d'une base de données, par des requêtes successives variant les critères d'interrogation de la base.

Par exemple, la demande de brevet EP 1 197 951 décrit un système de reconnaissance vocal estimant des scores de reconnaissance pour estimer la ressemblance entre l'énoncé et les modèles d'un lexique. Ce document concerne uniquement un contexte vocal et non multimodal.

La demande de brevet WO 01/69427 concerne une recherche d'informations en utilisant en entrée le langage naturel parlé et avec retour d'information multimodal, mais ne mentionne pas de méthode de choix automatique de critères d'interrogation de la base de données.

Ainsi, au vu de ce qui précède, l'invention a pour but de proposer un procédé et un système permettant de réduire le nombre de résultats obtenus, éventuellement à un unique résultat, lors d'une interrogation d'une base de données multimédia.

Aussi, selon l'invention, il est proposé un procédé d'interrogation d'une base de données multimédia à partir d'un terminal de télécommunication. On interroge la base de données en mettant en oeuvre une étape itérative dans laquelle, à l'itération courante, on calcule une partie extraite de la base de données au moyen d'un ensemble ordonné de critères d'interrogation élaboré à l'itération précédente ou lors d'une étape d'initialisation précédente si l'itération courante est la première itération, et d'un vecteur de critères comprenant des valeurs caractéristiques d'un ensemble prédéterminé de critères d'interrogation de la partie extraite de la base de données. Le vecteur de critères est initialisé lors de l'étape d'initialisation si l'itération courante est la première itération, et déterminé lors de l'itération précédente sinon. Les critères d'interrogation sont déterminés de manière à réduire le nombre de réponses respectivement fournies lors des itérations successives.

On détermine des critères d'interrogation d'une partie extraite de la base de données, de manière à optimiser la convergence de l'interrogation de la base de données vers un nombre réduit de résultats.

Dans un mode de mise en oeuvre préféré, on sélectionne les éléments de l'ensemble ordonné de critères d'interrogation parmi les composantes du vecteur de critères, le nombre d'éléments sélectionnés étant inférieur ou égal à un nombre prédéterminé.

Dans un mode de mise en oeuvre avantageux, ladite étape d'initialisation comprend des étapes durant lesquelles on initialise le vecteur de critères auquel on affecte la valeur d'un vecteur prédéterminé, on initialise la partie extraite de la base de données à laquelle on affecte la base de donnée complète, et on initialise l'ensemble ordonné de critères d'interrogation auquel on affecte la valeur d'un ensemble ordonné qui est une fonction du vecteur de critères initialisé.

Dans un mode de mise en oeuvre préféré, lors de l'étape itérative d'interrogation de la base de données, avant de déterminer l'ensemble ordonné de critères d'interrogation nécessaire à l'éventuelle itération suivante, on effectue une interrogation de la partie extraite de la base de données, et on récupère, en réponse, une nouvelle partie extraite de la base de données.

Dans un mode de mise en oeuvre avantageux, à l'itération courante, on effectue une interrogation à partir d'une information donnée par un utilisateur de terminal de télécommunication, en réponse à une demande d'informations dépendant dudit ensemble ordonné de critères d'interrogation.

Dans un mode de mise en oeuvre préféré, les demandes d'informations et les réponses correspondantes s'effectuent selon un mode quelconque parmi un ensemble prédéterminé de modes d'échanges d'informations. Chaque mode de l'ensemble prédéterminé de modes utilise des moyens capables de comparer les informations données par l'utilisateur et les valeurs des critères prédéterminés d'interrogation des enregistrements de la partie extraite de la base.

Dans un mode de mise en oeuvre avantageux, les modes d'échanges d'informations comprennent un mode vocal, et/ou un mode graphique, et/ou un mode texte.

Dans un mode de mise en oeuvre préféré, on achève l'étape itérative lorsque le nombre de réponses à l'itération courante, qui est le nombre d'enregistrements de la partie extraite de la base de données, est inférieur ou égal à un nombre maximum prédéterminé, ou lorsque l'ensemble ordonné de critères d'interrogation est vide.

Dans un mode de mise en oeuvre avantageux, à chaque itération, on détermine l'ensemble ordonné des critères d'interrogation, pour une éventuelle itération suivante, à partir du vecteur de critères formé de composantes caractéristiques des critères. Une composante représente un critère et comprend une priorité de proposition du critère représenté, une liste d'identifiants de champs de la base constituant le critère d'interrogation représenté, un booléen déterminant si le critère représenté est utilisable à l'itération courante, un booléen déterminant si le critère représenté est utilisable à toute itération, une table de hachage faisant correspondre, à chaque valeur unique du critère représenté, parmi les enregistrements de la partie extraite de la base, le nombre d'enregistrements dans lesquels apparaît cette valeur, un nombre total d'apparitions des valeurs du critère apparaissant plusieurs fois dans la partie extraite de la base, et une probabilité d'ambiguïté de choix de l'utilisateur égale au rapport du nombre total de valeurs ambiguës et du nombre total de valeurs de la partie extraite de la base de données.

Dans un mode de mise en oeuvre préféré, les critères dudit ensemble ordonné de critères d'interrogation ont une probabilité d'ambiguïté de choix inférieure ou égale à une probabilité d'ambiguïté maximale prédéterminée.

Selon l'invention, il est également proposé un système d'interrogation d'une base de données multimédia, à partir d'un terminal de télécommunication. Le système comprend une plate-forme de contenu hébergeant ladite base de données, et une pluralité de plates-formes indépendantes dédiées chacune à un mode particulier d'échanges de données, les éléments du système comprenant des moyens pour communiquer les uns avec les autres.

Dans un mode réalisation préféré, le système comprend en outre une plate-forme d'application hébergeant une application interrogeant ladite base de données en mettant en oeuvre un procédé précédemment décrit, ladite plate-forme d'application comprenant des moyens pour communiquer avec les autres éléments du système. Il comprend en outre des moyens de calcul itératif d'une partie extraite de la base de données au moyen d'un ensemble ordonné de critères d'interrogation élaboré à l'itération précédente ou lors d'une étape d'initialisation précédente si l'itération courante est la première itération, d'un vecteur de critères comprenant des valeurs caractéristiques d'un ensemble prédéterminé de critères d'interrogation de la partie extraite de la base de données, ledit vecteur de critères étant initialisé lors de l'étape d'initialisation si l'itération courante est la première itération, et déterminé lors de l'itération précédente sinon. Les critères d'interrogation sont déterminés de manière à réduire le nombre de réponses respectivement fournies lors des itérations successives.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 illustre un mode de réalisation d'un système selon un aspect de l'invention ; et
- la figure 2 illustre le procédé du système selon un aspect de l'invention.

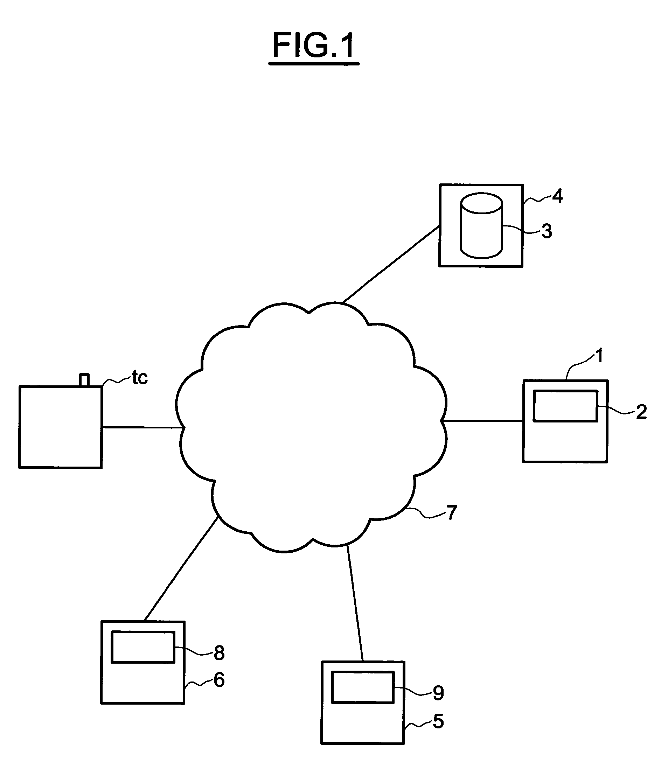

La figure 1 représente un système d'interrogation d'une base de données comprenant un terminal de télécommunication *tc*, une plate-forme d'application 1, hébergeant une application 2 mettant en oeuvre un service nécessitant des données stockées dans une base de données 3 hébergée dans une plate-forme de contenu 4. Le système comprend également une plate-forme graphique 5 et une plate-forme vocale 6. Toutes les plates-formes, ainsi que le terminal de télécommunication *tc* communiquent à travers un réseau de communication 7. On entend bien sur, par terminal de télécommunication, un téléphone mobile, un assistant numérique personnel, un ordinateur relié à un réseau de communication, ou tout autre dispositif aptes à communiquer au travers d'un réseau de communication. Ces plates-formes peuvent être matérielles ou logicielles, et la plate-forme d'application peut également être une plate-forme logicielle embarquée dans le terminal de télécommunication *tc* de l'utilisateur. Bien entendu si d'autres modes d'échanges d'informations sont utilisés, chaque mode supplémentaire aura une plate-forme dédiée comprenant une grammaire de reconnaissance du mode spécifique, comme les modes représentés. Ici, la plate-forme vocale 6 et la plate-forme graphique 5 ont des moyens respectifs 8 et 9 pour appliquer leur grammaire respective. Ces plates-formes vocale 6 et graphique 5 peuvent également être embarquées dans le terminal de télécommunication *tc.* Les plates-formes citées peuvent donc être toutes embarquées, en partie embarquées, ou non embarquées sur le terminal *tc.* Cela est également ment vrai pour d'éventuelles plate-formes additionnelles dédiées à d'autres modes d'échange d'informations. Une grammaire d'un mode d'échange d'informations permet de traduire une information de ce mode en une information codée équivalente, comme si elle avait été fournie au moyen d'un clavier, dans un mode texte. Le terminal de télécommunication *tc* est bien entendu apte à utiliser un mode texte, à partir d'un clavier, d'un clavier virtuel, d'un clavier de téléphone mobile, ou de tout autre dispositif utilisant un mode texte.

L'utilisateur d'un terminal de télécommunication *tc* se connecte, pour utiliser un service, à la plate-forme d'application 1. Bien entendu, l'application peut être directement embarquée dans le terminal de télécommunication *tc*. Cette application nécessite à un moment donné d'interroger une base de données, dépendant du service à fournir. Cette interrogation peut nécessiter l'emploi d'un identifiant et d'un mot de passe en cas de données confidentielles. La base de données sélectionnée est alors interrogée de manière itérative afin d'optimiser la convergence de l'interrogation de la base de données vers un nombre réduit de résultats. Suivant le mode d'échange d'informations choisi par l'utilisateur parmi un ensemble de modes prédéterminé, avant chaque interrogation d'une partie extraite de la base de données, les données transmises par l'utilisateur sont traduites au moyen d'une grammaire appropriée en données codées usuelles des moyens informatiques. Par exemple si l'utilisateur transmet des informations par mode vocal, alors ces données sont traduites par les moyens 8 de la plate-forme vocale 6, en données codées de manière usuelle, comme si elles avaient été entrées au moyen d'un clavier.

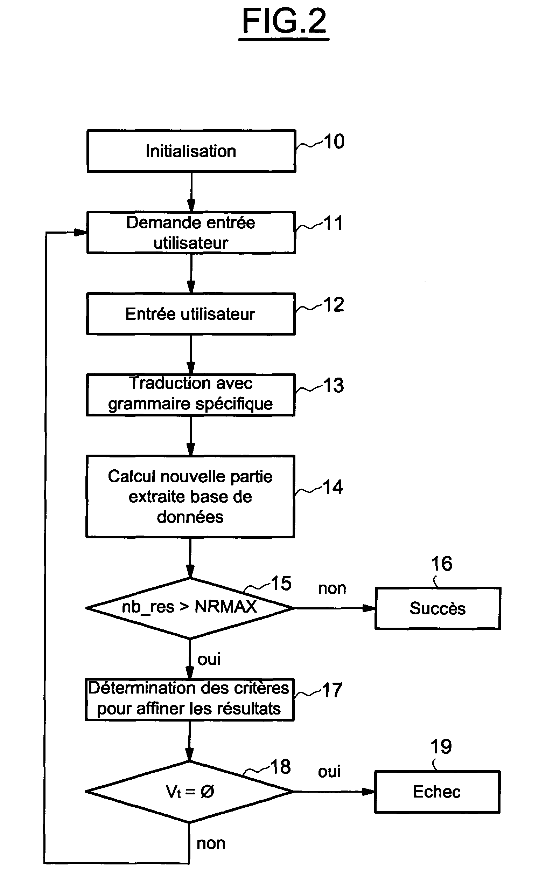

La figure 2 illustre le procédé selon un aspect de l'invention. Une étape 10 d'initialisation est suivie d'une interrogation itérative de la base de données 3. Cette interrogation itérative comprend successivement une étape 11 de demande d'entrée de données à l'utilisateur d'un terminal de télécommunication *tc* représenté sur la figure 1, une étape 12 d'entrée de données de l'utilisateur, une étape 13 de traduction des données entrées par l'utilisateur au moyen d'une grammaire spécifique du mode d'échange de données utilisé, et une étape 14 de calcul d'une partie extraite de la base de données à partir d'un ensemble ordonné de critères d'interrogation (Vt) élaboré à l'itération précédente ou lors d'une étape d'initialisation précédente si l'itération courante est la première itération. L'interrogation itérative comprend également une étape 15 de test au cours de laquelle on teste si le nombre de résultats nb_res fournis lors de l'étape 14 est supérieur à un nombre maximum prédéterminé NRMAX. Si le test est négatif, en d'autres termes si le nombre de résultats nb_res est inférieur ou égal au nombre maximum prédéterminé NRMAX la procédure se poursuit par une étape 16 correspondant à un succès de l'interrogation de la base et donc à un arrêt des itérations. Si le test est positif, ou si le nombre de résultats nb_res est supérieur au nombre maximum prédéterminé NRMAX, la procédure se poursuit par une étape 17 de détermination d'un ensemble ordonné de critères Vt pour affiner les résultats. Une étape 18 de test durant laquelle on teste si l'ensemble ordonné de critères Vt est vide est alors mise en oeuvre. Si le résultat du test est positif, c'est-à-dire si l'ensemble ordonné de critères Vt est vide, une étape 19 d'échec de l'interrogation de la base est mise en oeuvre. Sinon, si l'ensemble ordonné de critères Vt contient au moins un critère, on passe à l'itération suivante en bouclant sur l'étape 11 de demande d'entrée de données à l'utilisateur du terminal de télécommunication *tc.*

On va maintenant détailler chacune de ces étapes, de manière théorique, puis on mettra en oeuvre ces étapes sur un exemple pratique.

Lors de l'étape 10 d'initialisation, on détermine la base de données sur laquelle l'utilisateur va effectuer ses requêtes au moyen d'une application mettant en oeuvre un service qu'il consulte. Si nécessaire, la détermination de la base de données peut être effectuée à l'aide d'un identifiant et d'un mot de passe, si les données sont confidentielles. Les données dépendent du service proposé, et peuvent ainsi représenter un contact d'un carnet d'adresses, une base d'oeuvres musicales dans laquelle on va tenter de reconnaître une liste de morceaux ressemblant à un chant de l'utilisateur, ou bien tout autre type de données utiles à un service.

On initialise un vecteur de critères Vcr, comprenant des valeurs caractéristiques d'un ensemble prédéterminé de critères d'interrogation de la partie extraite de la base de données, avec un vecteur de critères prédéterminé Vcr_init. Les composantes du vecteur de critères ont la structure suivante :

(Pr iorité ; Lic ; Utilisable ; Tjs_ Utilisable ; Hv N _app)

dans laquelle :

- Priorité est un nombre entier qui détermine l'ordre de priorité de proposition du critère ;
- Lic est une liste d'identifiants des champs de la base de données qui constituant le critère d'interrogation ;
- Utilisable est un nombre booléen qui détermine, au cours des itérations, si le critère reste utilisable ;
- Tjs_Utilisable est un nombre booléen qui détermine si le critère sera toujours utilisable, à chaque itération, si l'on souhaite qu'un critère reste tout le temps possible d'utilisation ;
- Hv est une table de hachage faisant correspondre à chaque valeur unique du critère parmi les enregistrements, le nombre d'occurrences de cette valeur. La fonction permettant de déterminer si deux valeurs sont différentes dépend du type d'application et du mode d'échange de données utilisé, par exemple dans le cas d'une sélection vocale d'une entrée d'un carnet d'adresses, deux critères sont identiques si leur forme phonétiques sont identiques ;
- N_app est le nombre total d'apparitions des valeurs du critère apparaissant plusieurs fois dans la partie extraite de la base de données ; et
- Pa est une probabilité d'ambiguïté de choix, égale à N_app/nb_res.

La priorité Priorité de chaque critère est prédéfinie lors de l'étape 10 d'initialisation, et on en déduit une initialisation Vt_init de l'ensemble ordonné de critères d'interrogation Vt.

Dans l'étape 11, pour une itération courante, on demande à l'utilisateur de transmettre des données permettant à l'application d'interroger la partie courante extraite de la base en fonction desdites données transmises par l'utilisateur, à partir de l'ensemble ordonné de critères d'interrogation Vt. Le mode d'expression de cette demande peut être multiple, en fonction du système, par exemple vocal, textuel, graphique...). On calcule également des structures de données permettant d'effectuer la recherche de résultats à partir des données transmises par l'utilisateur. Les structures de données comprennent une grammaire spécifique pour chaque mode d'échange de données et une fonction capable d'appliquer cette grammaire spécifique. Pour la première itération, ces grammaires spécifiques peuvent être pré-calculées à chaque mise à jour de la base de données.

On détaille ci-dessous cette étape 11, par exemple lorsque l'on dispose d'une plate-forme vocale 6, bien évidemment équipée d'un système de reconnaissance vocale, dans le cas d'un accès à un carnet d'adresses. La grammaire spécifique est alors une grammaire vocale relative à la langue utilisée. Des moyens 8 pour appliquer la grammaire vocale sont aptes à faire correspondre un indice de vecteur à une forme orthographique reconnue, et à transformer une forme orthographique en son équivalence phonétique, pour la langue utilisée. La table de hachage Hv du vecteur Vcr a pour entrée des chaînes de caractères représentant des formes phonétiques, l'égalité de deux formes phonétiques étant déterminée par l'égalité classique des chaînes de caractères qui les représentent. On utilise alors en outre un vecteur Vp de composantes de structure suivante :

(Fo,Vr), dans laquelle :

- Fo est une forme orthographique possible pour une forme phonétique d'une entrée de la table de hachage Hv ; et
- Vr est un vecteur de composantes de structure (IDe, cr), où IDe est un identifiant de l'enregistrement résultat dans la base de données.

On utilise également une table de hachage Hp associant à une forme phonétique l'indice dans le vecteur Vp correspondant au résultat, pouvant être multiple, de la reconnaissance de cette forme phonétique.

L'algorithme utilisé consiste, à partir de la partie extraite de la base de données 3 à l'itération courante et de la liste des critères utilisables pour l'entrée utilisateur définie par l'ensemble ordonné des critères d'interrogation Vt, à déterminer le vecteur Vp et la table de hachage Hp pour construire une grammaire de reconnaissance associant chaque entrée orthographique possible à un indice dans le vecteur Vp, sans avoir deux entrées de formes orthographiques distinctes ayant une forme phonétique identique. En effet deux formes orthographiques distinctes avec une forme phonétique identique se retrouveront dans une même composante du vecteur Vp, avec pour forme orthographique la première rencontrée. L'algorithme est alors le suivant :

Pour tout enregistrement e d'indice IDe de la partie extraite courante de la base de données :

pour tout critère utilisable cr de Vt :

// calculer la forme orthographique fo de la valeur du critère

// cr de e et la forme phonétique fp correspondant à fo :
si cr est un critère mono-champ
alors
fo est la valeur du champ de cr pour e
fp est la représentation phonétique de fo
sinon
fo est la concaténation des valeurs des différents

champs de cr pour e

fp est la concaténation des réprésentations phonétiques

des valeurs des champs cr pour e, avec réutilisation des

représentations phonétiques déjà effectuées dans le cas

des critères mono-champ
si fp n'est pas connue dans Hp
alors
créer une nouvelle entrée pour fp dans Hp, correspondant à

l'indice i dans Vp, correspondant à une nouvelle entrée ep

dans ce vecteur.
affecter fo au champ Fo de ep (ep.Fo ← fo)
sinon
ep est l'entrée d'indice i dans Vp, avec i étant l'indice

correspondant à l'entrée fp de Hp
ajouter dans le champ Vr de ep une entrée avec {IDe, cr}

La construction de la grammaire est alors :

pour toute entrée ep de Vp
faire correspondre la forme orthographique du champ Fo de ep (ep.Fo) avec l'indice de ep dans Vp

Lorsque la plate-forme vocale 6 reconnaît une forme orthographique, elle donne comme résultat son indice i dans Vp, à partir duqel on obtiendra directement la liste des résultats possibles contenus dans le champ Vr du vecteur Vp (Vp(i).Vr)

L'étape 12 d'entrée utilisateur correspond à la réponse de l'utilisateur à la demande de l'étape 11. Cette réponse peut, bien entendu, être effectuée avec plusieurs modes d'échanges de données différents. En effet, dans le cas d'un carnet d'adresse, l'entrée utilisateur peut être l'énoncé d'un nom à reconnaître, la saisie d'un nom sur un clavier, ou bien la sélection d'une photographie sur une interface graphique.

L'étape 13 consiste à traduire l'entrée utilisateur au moyen de la grammaire spécifique du mode d'échanges de données utilisé. La grammaire spécifique donne alors un indice correspondant à la reconnaissance de l'entrée utilisateur.

L'étape 14 consiste ensuite à calculer la nouvelle partie extraite de la base de données 3, à partir de la partie extraite courante et de l'indice fourni à l'étape 13 précédente. La nouvelle partie extraite est indiquée par le vecteur Vr de la composante de Vp ayant pour indice ledit indice fourni à l'étape 13.

L'étape 15 teste ensuite si le nombre de résultats nb_res c'est-à-dire le nombre d'enregistrements de la nouvelle partie extraite de la base est supérieur au nombre maximum prédéterminé NRMAX, et si ce test est négatif, en d'autres termes si le nombre d'enregistrements résultats est inférieur ou égal au nombre maximum prédéterminé NRMAX, alors on a un succès de l'étape itérative à l'étape 16, car le nombre de résultats obtenu est inférieur ou égal au nombre maximum NRMAX prédéterminé. En revanche, si le résultat du test de l'étape 15 est positif, on détermine, lors de l'étape 17, l'ensemble ordonné des critères Vt d'interrogation pour une éventuelle itération suivante.

La détermination de l'ensemble ordonné des critères Vt de l'étape 17 est effectuée en utilisant l'algorithme suivant :

```
// calcul de l'ensemble ordonné de critères Vt


// élimination des critères déjà utilisés
pour toute composante résultat r de Vr :
        si (la composante Tjs_Utilisable de la composante critère cr du
            résultat r (r.cr.Tjs_Utilisable) vaut faux)
        alors
            on affecte la valeur faux à la composante Utilisable de la
            composante critère cr du résultat r (r.cr.Utilisable ← faux)
        fin si
fin pour
```

// remise à zéro des variables des critères restant :

pour toute composante critère cr du vecteur de critères Vcr :

    si (la composante Tjs_Utilisable du citère cr (cr.Tjs_Utilisable) vaut

        faux et la composante Utilisable (cr.Utilisable) vaut vrai)

    alors

        on vide la table de hachage Hv du critère cr

        on affecte la valeur nulle au nombre total d'apparition N_app du

        critère cr (cr.N_app←0)

    fin si

fin pour


// calcul des données : table de hachage Hv, nombre total d'apparitions

// N_app, probabilité d'ambiguïté de choix Pa de  chacun

// des critères utilisables.

soit Vt un ensemble ordonné de critères

    pour tout critère cr du vecteur de critères Vcr :

        si (la compsante Tjs_Utilisable du critère cr (cr.Tjs_Utilisable)

          vaut vrai)

        alors

          on insère le critère cr dans l'ensemble Vt

        sinon

          si (la composante Utilisable du critère cr (cr.Utilsable) vaut

            vrai)

          alors

          pour tout résultat r du vecteur Vr

            si (la valeur valcr correspondant au critère cr dans

              l'enregistrement du résultat r est déjà présent dans

              la composante table de hachage Hv de cr (cr.Hv))

            alors

              // valeur mutiple

              si (le nombre d'occurrences de la valeur valcr dans

                la composante table de hachage Hv du critère cr

                (cr.Hv[valcr]) vaut 1

              alors

```
                    // première fois que l'on identifie cette
                    // valeur multiple
                    // il faut comptabilisersa première
                    // occurrence
                    on incrémente de 1 le nombre d'apparitions
                    N_app du critère cr (cr.N_app←cr.N_app+1)
                fin si
                // on comptabilise la nouvelle occurrence
                on incrémente de 1 le nombre d'apparitions N_app
                du critère cr (cr.N_app←cr.N_app+1)
                on incrémente de 1 le nombre d'apparitions de la
                valeur valcr du critère cr dans sa table de hachage
                Hv (cr.Hv[valcr]← cr.Hv[valcr]+1)
            sinon
                on insère cette valeur valcr dans la table de hachage
                Hv du critère cr, en lui faisant correspondre 1
                comme nombre d'occurrences
            fin si
        si (le nombre d'entrées de la table de hachage Hv du critère
            cr est supérieur à 1)
        alors
            // mise à jour la probabilité d'ambiguïté Pa du critère cr
            on affecte à la probabilité d'ambiguïté Pa du critère cr le
            quotient du nombre total d'apparition N_app et du
            nombre d'entrée dans le vecteur Vr
            (cr.Pa←cr.N_app)
            si (la probabilité d'ambiguïté Pa est inférieur ou égale à
                une probabilité maximale prédéterminée PAMAX
                (cr.Pa≤PAMAX))
            alors
                on insère le critère cr dans l'ensemble Vt
            fin si
        sinon
```

on affecte la valeur faux à la composante Utilisable du critère cr (cr.utilisable←faux)

    fin si

    fin pour

fin pour


// on trie l'ensemble Vt afin d'avoir un ensemble ordonné, en utilisant

// le fonction de comparaison entre deux critères c1 et c2 suivante :

si (la composante Tjs_Utilisable de c1 vaut vrai ou la composante Tjs_Utilisable de c2 vaut vrai)

alors

    on met c1 avant c2 ou c2 avant c1 an fonction de leur composante Priorité prédéterminée

sinon

    si(la composante probabilité d'ambiguïté du critère c1 est inférieure à la composante probabilité d'ambiguïté du critère c2 (c1.Pa<c2.Pa))

    alors

        on met c1 avant c2

    sinon

        si (la composante probabilité d'ambiguïté du critère c2 est inférieure à la composante probabilité d'ambiguïté du critère c1 (c2.Pa<c1.Pa))

        alors

            on met c1 avant c2

        sinon

            si (la taille de la table de hachage Hv du critère c1 est supérieure à la taille de la table de hachage Hv du critère c2 (c1.Hv>c2.Hv))

            alors

                on met c1 avant c2

            sinon

si (la taille de la table de hachage Hv du critère c2 est supérieure à la taille de la table de hachage Hv du critère c1 (c2.Hv>c1.Hv))

alors

on met c2 avant c1

sinon

on classe les deux critères selon leur composante priorité prédéterminée

fin si

fin si

fin si

fin si

fin si

On va maintenant décrire un exemple détaillé de fonctionnement de l'invention en prenant pour exemple un service d'accès à un carnet d'adresses par accès vocal, le système comporte alors une plate-forme vocale.

Le carnet d'adresse est par exemple :

| ID | Prénom | Nom | Surnom | Ville | Groupe | Photo | Audio |
|----|--------|-----|--------|-------|--------|-------|-------|
| 1 | Jean-Michel | Martin | Jean_mi | Lannion | Sports | @ph1 | @file1 |
| 2 | Nicolas | Dupond | Nicolas | Lannion | Travail | @ph2 | @file2 |
| 3 | Michelle | Martin | Mimi | Paris | Amis | @ph3 | @file3 |
| 4 | Jean | Michel | Jean-mi | Metz | Sports | @ph4 | @file4 |
| 5 | Nicolas | Dupont | Nico | Paris | Famille | @ph5 | @file5 |
| 6 | Michelle | Chemin | Lili | Lannion | Travail | @ph6 | @file6 |
| 7 | Jean | Michelle | Ze boss | Nice | Sports | @ph7 | @file7 |
| 8 | Jean-Michel | Duc | Jean-mi | Metz | Sports | @ph8 | @file8 |

Dans cet exemple le nombre maximal de critères NCMAX égal à trois (NCMAX=3).

Lors de l'étape 10, on initialise le vecteur de critères Vcr au moyen d'un vecteur de critères prédéterminé Vcr_init :

$$Vcr=Vcr\_init=(\ c1=\{\ \text{Priorité}=2,\ \text{Lic}=\{\text{Prénom}\},\ \text{Utilisable}=vrai,$$
$$\text{Tjs\_Utilisable}=faux,\quad Hv=\{\},\quad N\_app=0,$$
$$Pa=0\ \},$$
$$c2=\{\quad \text{Priorité}=1,\quad \text{Lic}=\{\text{Nom}\},\quad \text{Utilisable}=vrai,$$
$$\text{Tjs\_Utilisable}=faux,\quad Hv=\{\},\quad N\_app=0,$$
$$Pa=0\ \},$$
$$c3=\{\qquad \text{Priorité}=3,\qquad \text{Lic}=\{\text{Prénom}\quad \text{Nom}\},$$
$$\text{Utilisable}=vrai,\qquad \text{Tjs\_Utilisable}=faux,$$
$$Hv=\{\},\ N\_app=0,\ Pa=0\ \},$$
$$c4=\{\ \text{Priorité}=4,\ \text{Lic}=\{\text{Surnom}\},\ \text{Utilisable}=vrai,$$
$$\text{Tjs\_Utilisable}=faux,\quad Hv=\{\},\quad N\_app=0,$$
$$Pa=0\ \},$$
$$c5=\{\quad \text{Priorité}=5,\quad \text{Lic}=\{\text{Ville}\},\quad \text{Utilisable}=vrai,$$
$$\text{Tjs\_Utilisable}=faux,\quad Hv=\{\},\quad N\_app=0,$$
$$Pa=0\ \},$$
$$c6=\{\ \text{Priorité}=6,\ \text{Lic}=\{\text{Groupe}\},\ \text{Utilisable}=vrai,$$
$$\text{Tjs\_Utilisable}=faux,\quad Hv=\{\},\quad N\_app=0,$$
$$Pa=0\ \})$$

On obtient alors immédiatement l'initialisation de l'ensemble ordonné Vt par un ensemble Vt_init directement déduit des valeurs du champ Priorité du vecteur Vcr.

On en déduit immédiatement Vt={c2, c1, c3}, avec c1={Prénom}, c2={Nom}, et c3={Prénom, Nom}.

Ensuite, l'étape itérative débute par l'étape 11, on détermine la table de hachage Hp associant à une forme phonétique l'indice dans Vp correspondant au résultat, pouvant être multiple, de la reconnaissance de cette forme phonétique, la grammaire de reconnaissance vocale, et le vecteur Vp :

$$Hp=\qquad \textstyle\sum\ddot{a}\ \text{mifel}\ \to\ 0$$

$$\text{Nik}\{\ (o)\ (ao)\ \}1a\ \to\ 1$$

$$\text{Mifel}\ \to\ 2$$

$$\textstyle\sum\ddot{a}\ \to\ 3$$

$$\text{MaRtë}\ \to\ 4$$

$$\text{Dypö}\ \to\ 5$$

$$f(\theta)\text{më}\ \to\ 6$$

$$\text{dyc}\ \to\ 7$$

$$\textstyle\sum\ddot{a}\ \text{mifel maRtë}\ \to\ 8$$

$$\text{Nik}\{\ (o)\ (ao)\ \}1a\ \text{dypö}\ \to\ 9$$

$$\text{mifel maRtë}\ \to\ 10$$

mifel f(θ)më → 11

∑ä mifel dyc → 12

grammaire de reconnaissance vocale :

jean-michel → 0
nicolas → 1
michelle → 2
jean → 3
martin → 4
dupond → 5
chemin → 6
duc → 7
jean-michel martin → 8
nicolas dupond → 9
michelle martin → 10
michelle chemin → 11
jean-michelle duc → 12

et le vecteur Vp est :

Vp =     ( 0 : {Fo= "jean-michel", Vr=({IDe=1, cr={Prénom}}, {IDe=8, cr={Prénom}},

{IDe=4, cr={Prénom, Nom}},

{IDe=7, cr={Prénom, Nom}})},

1 : {Fo= "nicolas", Vr=({IDe=2, cr={Prénom}},

{IDe=5, cr={Prénom}})},

2 : {Fo= "michelle", Vr=({IDe=3, cr={Prénom}},

{IDe=6, cr={Prénom}}, {IDe=4, cr={Nom}}, {IDe=7, cr={Nom}})},

3 : {Fo= "jean", Vr=({IDe=4, cr={Prénom}},

{IDe=7, cr={Prénom}})},

4 : {Fo= "martin", Vr=({IDe=1, cr={Nom}},

{IDe=3, cr={Nom}})},

5 : {Fo= "dupond", Vr=({IDe=2, cr={Nom}},

{IDe=53, cr={Nom}})},

6 : {Fo= "chemin", Vr=({IDe=6, cr={Nom}})},

7 : {Fo= "duc", Vr=({IDe=8, cr={Nom}})},

8 : {Fo= "jean-michel martin",

Vr=({IDe=1, cr={Prénom, Nom}})},

9 : {Fo= "nicolas dupond",

Vr=({IDe=2, cr={Prénom, Nom}},

{IDe=5, cr={Prénom, Nom}})},

10 : {Fo= "michelle martin",

Vr=({IDe=3, cr={Prénom, Nom}})},

11 : {Fo= "michelle chemin",

Vr=({IDe=6, cr={Prénom, Nom}})},

10 : {Fo= "jean-michel duc",

Vr=({IDe=8, cr={Prénom, Nom}})} )

L'étape 11 se termine par la demande d'entrée à l'utilisateur, dans cet exemple, le système demande à l'utilisateur via la plate-forme vocale 6 et le terminal de télécommunication *tc :* "Prononcez le nom, le prénom, ou le prénom suivi du nom de la personne à contacter". Cette demande correspond aux trois critères de l'ensemble ordonné Vt.

L'utilisateur prononce alors "Jean-michel", et on suppose que la plate-forme vocale 6 a bien reconnu "Jean-michel" et retourne l'indice 0 de la grammaire vocale.

On calcule alors, lors de l'étape 14, la nouvelle partie extraite de la base de données 3, donnée par le vecteur Vr de l'entrée 0 du vecteur Vp, soit :

Vr = ({IDe=1, cr={Prénom}}, {IDe=8, cr={Prénom}},

{IDe=4, cr={Prénom, Nom}},

{IDe=7, cr={Prénom, Nom}} )

Il y a plusieurs résultats , les enregistrements d'identifiant IDe 1, 8, 4 et 7, les deux premiers étant sélectionnés par le prénom, et les deux autres par le prénom suivi du nom. La nouvelle partie extraite de la base de données 3 est donc l'extraction suivante :

| ID | Prénom | Nom | Surnom | Ville | Groupe | Photo | Audio |
|----|--------|-----|--------|-------|--------|-------|-------|
| 1 | Jean-Michel | Martin | Jean_mi | Lannion | Sports | @ph1 | @file1 |
| 4 | Jean | Michel | Jean-mi | Metz | Sports | @ph4 | @file4 |
| 7 | Jean | Michelle | Ze boss | Nice | Sports | @ph7 | @file7 |

(suite)

| ID | Prénom | Nom | Surnom | Ville | Groupe | Photo | Audio |
|----|--------|-----|--------|-------|--------|-------|-------|
| 8 | Jean-Michel | Duc | Jean-mi | Metz | Sports | @ph8 | @file8 |

Il reste plusieurs résultats, et dans cet exemple on a le nombre maximal prédéterminé de réponse NRMAX qui vaut 1 (NRMAX=1), car au final on ne veut qu'une seule réponse.

Lors de l'étape 15, le test est positif, c'est-à-dire que le nombre de réponse nb_res est supérieur au nombre maximum autorisé NRMAX.

On enchaîne alors avec l'étape 17, au cours de laquelle on détermine le nouvel ensemble ordonné Vt de critère pour affiner les résultats lors d'une éventuelle itération suivante. On met à jour le vecteur de critères Vcr, qui vaut alors :

$$Vcr = (\ c1 = \{Priorité=2, Lic=\{Prénom\}, Utilisable=faux,$$

$$Tjs\_Utilisable=faux, Hv=\{\}, N\_app=0, Pa=0\},$$

$$c2= (Priorité=1 , Lic=\{Nom\}, Utilisable=vrai,$$

$$Tjs\_Utilisable=faux, Hv=\{MaRtë\rightarrow1, Mifel\rightarrow2,$$

$$dyc\rightarrow1\}, N\_app=2, Pa=2/4=1/2\},$$

$$c3= \{Priorité=3, Lic=\{Prénom, Nom\}, Utilisable=faux,$$

$$Tjs\_Utilisable=faux, Hv=\{\}, N\_app=0, Pa=0\},$$

$$c4= \{Priorité=4, Lic=\{Surnom\}, Utilisable=vrai,$$

$$Tjs\_Utilisable=faux, Hv=\{\sum\ddot{a}mi\rightarrow3, zebos\rightarrow1\},$$

$$N\_app=3, Pa=3/4\},$$

$$c5= \{Priorité=5, Lic=\{Ville\}, Utilisable=vrai,$$

$$Tjs\_Utilisable=faux, Hv=\{lani\ddot{o} \rightarrow 1, mes\rightarrow2,$$

$$nis\rightarrow1\}, N\_app=2, Pa=2/4=1/2\},$$

$$c6= \{Priorité=6, Lic=\{groupe\}, Utilisable=faux,$$

$$Hv=\{sp\acute{o}\rightarrow4\}, N\_app=4, Pa=1\}\ )$$

L'ensemble des critères d'interrogation Vt ne peut alors plus contenir les critères c1, c3, et c6, car leur composante Utilisable vaut faux. Notons que la composante Utilisable de c6 vaut faux parce qu'il n'y a qu'une seule valeur distincte d'entrée dans la composante table de hachage Hv de c6. Vt ne peut, en outre, comprendre le critère c4, car celui-ci n'est pas assez discriminant, en effet sa probabilité d'ambiguïté Pa vaut 3/4 et est supérieure à une valeur maximale prédéterminée PAMAX, valant 0,5 dans cet exemple.

On ordonne ensuite l'ensemble de critères d'interrogation Vt comme cela a été décrit précédemment et on obtient l'ensemble de critères, à savoir :

$$Vt= \{ c2, c5 \},$$

dans lequel :

$$c2= \{Priorité=1, Lic=\{Nom\}, Utilisable=vrai,$$

$$Tjs\_Utilisable=faux, Hv=\{MaRtë \rightarrow 1,$$

$$Mifel \rightarrow 2, dyc \rightarrow 1\}, N\_app=2, Pa=2/4=1/2\},$$

$$c5 = \{Priorité=5, Lic=\{Ville\}, Utilisable=vrai,$$

$$Tjs\_Utilisable=faux, Hv=\{laniö \rightarrow 1, mes \rightarrow 2,$$

$$nis \rightarrow 1\}, N\_app=2, Pa=2/4=1/2\}$$

On teste ensuite, lors de l'étape 18 si l'ensemble ordonné Vt est vide, ce qui n'est pas le cas, et alors on passe à la deuxième itération du procédé, c'est-à-dire à l'étape 11.
L'affinage des résultats s'effectue alors avec les critères c2 (le nom) et c5 (la ville), avec les variables suivantes :

$$Hp= \quad MaRtë \rightarrow 0$$

$$Mifel \rightarrow 1$$

$$dyc \rightarrow 2$$

$$laniö \rightarrow 3$$

$$mes \rightarrow 4$$

$$nis \rightarrow 5$$

grammaire de reconnaissance vocale :

$$martin \rightarrow 0$$
$$michel \rightarrow 1$$
$$duc \rightarrow 2$$
$$lannion \rightarrow 3$$
$$metz \rightarrow 4$$
$$nice \rightarrow 5$$

$$Vp = ( 0 : \{Fo= "martin", Vr=(\{IDe=1, cr=\{Nom\}\})\},$$

$$1 : \{Fo= "michel", Vr=(\{IDe=4, cr=\{Nom\}\},$$

$$\{IDe=7, cr=\{Nom\}\})\},$$

$$2 : \{Fo= "duc", Vr=(\{IDe=1, cr=\{Surnom\}\})\},$$

$$3 : \{Fo= \text{"lannion"}, Vr=(\{IDe=1, cr=\{Ville\}\})\},$$

$$4 : \{Fo= \text{"metz"}, Vr=(\{IDe=4, cr=\{Ville\}\},$$

$$\{IDe=8, cr=\{Ville\}\})\},$$

$$5 : \{Fo= \text{"nice"}, Vr=(\{IDe=7, cr=\{Ville\}\})\} )$$

L'étape 11 se termine par la demande d'entrée à l'utilisateur, dans cette itération, le système demande à l'utilisateur via la plate-forme vocale 6 et le terminal de télécommunication *tc* : "Précisez le nom ou la ville de la personne à contacter". Cette demande correspond aux deux critères de l'ensemble ordonné Vt. La stratégie à employer peut dépendre du nombre de valeurs différentes d'un critère, par exemple, si ce nombre est inférieur à un nombre prédéterminé, on peut les faire énumérer plutôt que de poser une question ouverte. De même, si la plate-forme spécifique échoue plusieurs fois d'affilée à reconnaître une réponse d'un des critères proposés, elle peut demander précisément un des autres critères proposés.

L'utilisateur, lors de l'étape 12, prononce "michel". On suppose que la plate-forme vocale a bien reconnu "michel". Lors de l'étape 13, l'indice 1 de la grammaire vocale est identifié.

Le calcul de la partie extraite de la base de données est alors effectué lors de l'étape 14, à partir du vecteur Vr de la composante d'indice 1 du vecteur Vp, soit :

$$Vr=(\{IDe=4, cr=\{Nom\}\}, \{IDe=7, cr=\{Nom\}\})$$

La nouvelle partie extraite de la base de données est alors :

| ID | Prénom | Nom | Surnom | Ville | Groupe | Photo | Audio |
|----|--------|-----|--------|-------|--------|-------|-------|
| 4 | Jean | Michel | Jean-mi | Metz | Sports | @ph4 | @file4 |
| 7 | Jean | Michelle | Ze boss | Nice | Sports | @ph7 | @file7 |

Il reste encore plusieurs résultats. Comme NRMAX vaut 1, le test de l'étape 15 est positif, et on passe à l'étape 17, au cours de laquelle on détermine le nouvel ensemble ordonné Vt de critère pour affiner les résultats lors d'une éventuelle itération suivante.

On met à jour le vecteur de critères Vcr, qui vaut alors :

$$Vcr = ( c_1= \{Priorité=2, Lic=\{Prénom\}, Utilisable=faux,$$

$$Tjs\_Utilisable=faux, Hv=\{\}, N\_app=0, Pa=0\},$$

$$c_2= \{Priorité=1, Lic=\{Nom\}, Utilisable=faux,$$

$$Tjs\_Utilisable=faux, Hv=\{\}, N\_app=0, Pa=0\},$$

$$c_3= \{Priorité=3, Lic=\{Prénom, Nom\}, Utilisable=faux,$$

$$Tjs\_Utilisable=faux, Hv=\{\}, N\_app=0, Pa=0\},$$

$$c_4= \{Priorité=4, Lic=\{Surnom\}, Utilisable=vrai,$$

$$Tjs\_Utilisable=faux, Hv=\{\sum \text{ämi} \rightarrow 1, \text{zebos} \rightarrow 1\},$$

N_app=0, Pa=0},

c5= {Priorité=5, Lic={Ville}, Utilisable=vrai,

Tjs_Utilisable=faux, Hv={ mes→1, nis→1},

N_app=0, Pa=0},

c6= {Priorité=6, Lic={groupe}, Utilisable=faux,

Hv={spó → 4}, N_app=4, Pa=1} )

L'ensemble des critères d'interrogations Vt ne peut alors plus contenir les critères c1, c2, c3, et c6, car leur composante Utilisable vaut faux. Après un tri des critères c4 et c5, comme décrit précédemment, on obtient :

Vt= { c4, c5 }

, dans lequel :

C4= {Priorité=4, Lic={Surnom}, Utilisable=vrai,

Tjs_Utilisable=faux, Hv=$\Sigma$ämi→1,

zebos→1}, N_app=0, Pa=0},

c5 = {Priorité=5, Lic={Ville}, Utilisable=vrai,

Tjs_Utilisable=faux, Hv={mes→1, nis→1,

nis→1}, N_app=0, Pa=0}

On teste ensuite, lors de l'étape 18 si l'ensemble ordonné Vt est vide. Ce n'est pas le cas. On passe alors à la troisième itération du procédé, c'est-à-dire à l'étape 11.

L'affinage des résultats s'effectue alors avec les critères c4 (le surnom) et c5 (la ville), avec les variables suivantes :

Hp=        $\Sigma$ämi → 0

zebos → 1

mes → 2

nis → 3

grammaire de reconnaissance vocale :

jean-mi → 0
ze boss → 1
metz → 2
nice → 3

$$Vp = ( \ 0 : \{Fo= "jean\text{-}mi", \ Vr=(\{IDe=4, \ cr=\{Surnom\}\})\},$$

$$1 : \{Fo= "ze \ boss", \ Vr=(\{IDe=7, \ cr=\{Surnom\}\})\},$$

$$2 : \{Fo= "metz", \ Vr=(\{IDe=4, \ cr=\{Ville\}\})\},$$

$$3 : \{Fo= "nice", \ Vr=(\{IDe=7, \ cr=\{Ville\}\})\} \ )$$

Le système peut alors demander de préciser le surnom ou la ville de la personne à contacter, ou directement s'il faut contacter jean-mi qui habite à Metz ou ze boss qui habite à Nice.

L'utilisateur, lors de l'étape 12, prononce "ze boss", et on suppose que la plate-forme vocale a bien reconnu "ze boss".

La traduction avec la grammaire spécifique de l'étape 13, fournit l'indice 1.

On calcule alors, lors de l'étape 14 la nouvelle partie extraite de la base de données 3, donnée par le vecteur Vr de l'entrée 0 du vecteur Vp, soit :

$$Vr = ( \ \{IDe=7, \ cr=\{Surnom\}\} \ )$$

Il n'y a plus qu'un résultat, donc le test de l'étape 15 est négatif, donc on enchaîne avec l'étape 16 de succès, et le système peut donc indiquer à l'utilisateur les coordonnées de la personne qu'il veut contacter.

L'invention permet donc de réduire le nombre de résultats obtenus lors de l'interrogation d'une base de données multimédia, par affinages successifs, au moyen d'une étape itérative.

## Revendications

1. Procédé d'interrogation multimodal d'une base de données multimédia (3) à partir d'un terminal de télécommunication (*tc*), **caractérisé en ce que** l'on interroge la base de données (3) en mettant en oeuvre une étape itérative dans laquelle,

   à l'itération courante, on calcule une partie extraite de la base de données (3) au moyen d'un ensemble ordonné de critères d'interrogation (Vt) élaboré à l'itération précédente ou lors d'une étape d'initialisation (10) précédente si l'itération courante est la première itération, et d'un vecteur de critères (Vcr) comprenant des valeurs caractéristiques d'un ensemble prédéterminé de critères d'interrogation de la partie extraite de la base de données (3), ledit vecteur de critères (Vcr) étant initialisé lors de l'étape d'initialisation (10) si l'itération courante est la première itération, et déterminé lors de l'itération précédente sinon ;

   les critères d'interrogation étant déterminés de manière à réduire le nombre de réponses respectivement fournies lors des itérations successives.

2. Procédé selon la revendication 1, **caractérisé en ce que** l'on sélectionne les éléments de l'ensemble ordonné de critères d'interrogation (Vt) parmi les composantes du vecteur de critères (Vcr), le nombre d'éléments sélectionnés étant inférieur ou égal à un nombre prédéterminé (NCMAX).

3. Procédé selon la revendication 2, **caractérisé en ce que** ladite étape d'initialisation (10) comprend des étapes durant lesquelles :

   on initialise le vecteur de critères (Vcr) auquel on affecte la valeur d'un vecteur prédéterminé (Vcr_init) ;
   on initialise la partie extraite de la base de données (3) à laquelle on affecte la base de donnée (3) complète ; et
   on initialise l'ensemble ordonné de critères d'interrogation (Vt) auquel on affecte la valeur d'un ensemble ordonné (Vt_init) qui est une fonction du vecteur de critères (Vcr) initialisé (Vcr_init).

4. Procédé selon l'une quelconque des revendications 1 à 3, **caractérisé en ce que**, lors de l'étape itérative d'interrogation de la base de données (3),

   avant de déterminer l'ensemble ordonné de critères d'interrogation (Vt) nécessaire à l'éventuelle itération suivante, on effectue une interrogation de la partie extraite de la base de données (3), et on récupère (14), en réponse, une nouvelle partie extraite de la base de données (3).

**5.** Procédé selon la revendication 4, **caractérisée en ce que**, à l'itération courante, on effectue une interrogation à partir d'une information (12) donnée par un utilisateur de terminal de télécommunication, en réponse à une demande d'informations (11) dépendant dudit ensemble ordonné de critères d'interrogation (Vt).

**6.** Procédé selon la revendication 5, **caractérisé en ce que** les demandes (11) d'informations et les réponses (12) correspondantes s'effectuent selon un mode quelconque parmi un ensemble prédéterminé de modes d'échanges d'informations, chaque mode de l'ensemble prédéterminé de modes utilisant des moyens capables de comparer les informations données par l'utilisateur et les valeurs des critères prédéterminés d'interrogation des enregistrements de la partie extraite de la base.

**7.** Procédé selon la revendication 6, **caractérisé en ce que** les modes d'échanges d'informations comprennent un mode vocal, et/ou un mode graphique, et/ou un mode texte.

**8.** Procédé selon l'une quelconque des revendications 1 à 7, **caractérisé en ce que** l'on achève l'étape itérative lorsque le nombre de réponses (nb_res) à l'itération courante, qui est le nombre d'enregistrements de la partie extraite de la base de données, est inférieur ou égal à un nombre maximum prédéterminé (NRMAX), ou lorsque l'ensemble ordonné de critères d'interrogation (Vt) est vide.

**9.** Procédé selon l'une quelconque des revendications 1 à 8, **caractérisé en ce que**, à chaque itération, on détermine (17) l'ensemble ordonné des critères d'interrogation (Vt), pour une éventuelle itération suivante, à partir du vecteur de critères (Vcr) formé de composantes caractéristiques des critères, une composante représentant un critère et comprenant :

> une priorité (Priorité) de proposition du critère représenté;
> une liste d'identifiants (Lic) de champs de la base constituant le critère d'interrogation représenté ;
> un booléen (Utilisable) déterminant si le critère représenté est utilisable à l'itération courante ;
> un booléen (Tjs_Utilisable) déterminant si le critère représenté est utilisable à toute itération ;
> une table de hachage (Hv) faisant correspondre, à chaque valeur unique du critère représenté, parmi les enregistrements de la partie extraite de la base (3), le nombre d'enregistrements dans lesquels apparaît cette valeur ;
> un nombre total d'apparitions (N_app) des valeurs du critère apparaissant plusieurs fois dans la partie extraite de la base (3) ; et
> une probabilité d'ambiguïté de choix (Pa) de l'utilisateur égale au rapport du nombre total de valeurs ambiguës (N_app) et du nombre total de valeurs (nb_res) de la partie extraite de la base de données (3).

**10.** Procédé selon la revendication 9, **caractérisé en ce que** les critères dudit ensemble ordonné de critères d'interrogation (Vt) ont une probabilité d'ambiguïté de choix (Pa) inférieure ou égale à une probabilité d'ambiguïté maximale prédéterminée (PAMAX).

**11.** Système d'interrogation multimodal d'une base de données multimédia (3) à partir d'un terminal de télécommunication *(tc),* ledit système comprenant une plate-forme de contenu (4) hébergeant ladite base de données (3), **caractérisé en ce qu'**il comprend une pluralité de plates-formes indépendantes dédiées chacune à un mode particulier d'échanges de données, les éléments du système comprenant des moyens pour communiquer les uns avec les autres au travers d'un réseau de communication (7), et **en ce qu'**il comprend des moyens de calcul itératif d'une partie extraite de la base de données au moyen d'un ensemble ordonné de critères d'interrogation (Vt) élaboré à l'itération précédente ou lors d'une étape d'initialisation (10) précédente si l'itération courante est la première itération, d'un vecteur de critères (Vcr) comprenant des valeurs caractéristiques d'un ensemble prédéterminé de critères d'interrogation de la partie extraite de la base de données (3), ledit vecteur de critères (Vcr) étant initialisé lors de l'étape d'initialisation (10) si l'itération courante est la première itération, et déterminé lors de l'itération précédente sinon ;
les critères d'interrogation étant déterminés de manière à réduire le nombre de réponses respectivement fournies lors des itérations successives.

**12.** Système selon la revendication 11, **caractérisé en ce qu'**il comprend en outre une plate-forme d'application (1) hébergeant une application interrogeant ladite base de données en mettant en oeuvre un procédé selon l'une quelconque des revendications 1 à 10, ladite plate-forme d'application (1) comprenant des moyens pour communiquer avec les autres éléments du système.

13. Programme d'ordinateur stocké sur un support de stockage de données, **caractérisé en ce qu'**il comprend des codes d'instructions adaptés pour mettre en oeuvre un procédé selon l'une quelconque des revendications 1 à 10, lorsqu'il est exécuté au sein d'un module de calcul.

14. Terminal de télécommunication (tc) pour systèmes d'interrogation multimodal selon l'une des revendications 11 et 12, **caractérisé en ce qu'**il comprend une pluralité de plates-formes logicielles indépendantes dédiées chacune à un mode particulier d'échanges de données.

# FIG.1

# FIG.2

```
┌─────────────────────┐
│    Initialisation    │ ⟩─10
└─────────────────────┘
           │
           ▼
┌─────────────────────┐
│   Demande entrée     │ ⟩─11
│     utilisateur      │
└─────────────────────┘
           │
           ▼
┌─────────────────────┐
│   Entrée utilisateur │ ⟩─12
└─────────────────────┘
           │
           ▼
┌─────────────────────┐
│   Traduction avec    │ ⟩─13
│  grammaire spécifique│
└─────────────────────┘
           │
           ▼
┌─────────────────────┐
│  Calcul nouvelle partie│
│   extraite base de    │ ⟩─14
│      données         │
└─────────────────────┘
           │
           ▼
      ╱─────────╲           non      ┌──────────┐
     ╱  nb_res >  ╲ ─15 ──────────▶ │  Succès  │  16
     ╲  NRMAX    ╱                   └──────────┘
      ╲─────────╱
           │ oui
           ▼
┌─────────────────────┐
│Détermination des critères│ ⟩─17
│ pour affiner les résultats│
└─────────────────────┘
           │
           ▼
      ╱─────────╲           oui      ┌──────────┐
     ╱  Vₜ = Ø   ╲ ─18 ──────────▶  │  Echec   │  19
      ╲─────────╱                    └──────────┘
           │ non
```

$nb\_res > NRMAX$

$V_t = \emptyset$

**EP 1 531 407 A1**

**Office européen des brevets**

# RAPPORT DE RECHERCHE EUROPEENNE

Numéro de la demande

EP 04 29 2643

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| X | ATTWATER D J ET AL: "LARGE-VOCABULARY DATA-CENTRIC DIALOGUES" BT TECHNOLOGY JOURNAL, BT LABORATORIES, GB, vol. 17, no. 1, janvier 1999 (1999-01), pages 149-159, XP000824588 ISSN: 1358-3948 * page 153, colonne de gauche, alinéa 4 - colonne de droite, alinéa 3 * * page 154, colonne de gauche, alinéa 3 - alinéa 5 * * page 156, colonne de gauche, dernier alinéa - colonne de droite, dernier alinéa * ----- | 1-12 | G06F17/30 |
| X,D | EP 1 197 951 A (PIONEER CORP) 17 avril 2002 (2002-04-17) * abrégé * * alinéa [0007] - alinéa [0008] * * alinéa [0029] - alinéa [0055] * * figures 1-4 * ----- | 1-12 | |
| A,D | WO 01/69427 A (VOUTSAS DIMITRIS ; HALVERSON CHRISTINE (US); STANFORD RES INST INT (US) 20 septembre 2001 (2001-09-20) * page 5, ligne 1 - page 8, ligne 6 * * page 10, ligne 1 - page 15, ligne 3 * ----- | 1-12 | **DOMAINES TECHNIQUES RECHERCHES (Int.Cl.7)** G06F |

Le présent rapport a été établi pour toutes les revendications

| Lieu de la recherche | Date d'achèvement de la recherche | Examinateur |
|---|---|---|
| Munich | 23 février 2005 | Konak, E |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 2643

La présente annexe indique les membres de la  famille de brevets relatifs aux documents  brevets cités dans le rapport de recherche européenne visé ci-dessus.
Lesdits members sont contenus au fichier informatique de l'Office  européen des brevets à la date du
Les renseignements fournis sont donnés à titre  indicatif et n'engagent pas la responsabilité  de l'Office européen des brevets.

23-02-2005

| Document brevet cité au rapport de recherche | | Date de publication | Membre(s) de la famille de brevet(s) | | Date de publication |
|---|---|---|---|---|---|
| EP 1197951 | A | 17-04-2002 | JP | 2002123290 A | 26-04-2002 |
| | | | EP | 1197951 A2 | 17-04-2002 |
| | | | US | 2002046027 A1 | 18-04-2002 |
| WO 0169427 | A | 20-09-2001 | US | 6742021 B1 | 25-05-2004 |
| | | | AU | 4739401 A | 24-09-2001 |
| | | | AU | 4917801 A | 24-09-2001 |
| | | | AU | 5290101 A | 24-09-2001 |
| | | | WO | 0169427 A2 | 20-09-2001 |
| | | | WO | 0169400 A2 | 20-09-2001 |
| | | | WO | 0169177 A2 | 20-09-2001 |
| | | | US | 6523061 B1 | 18-02-2003 |
| | | | US | 6757718 B1 | 29-06-2004 |

EPO FORM P0460

Pour tout renseignement concernant cette annexe : voir Journal Officiel de l'Office européen des  brevets, No.12/82